# EUROPEAN PATENT APPLICATION

(11) **EP 4 729 834 A1**
(43) Date of publication of application: **22.04.2026**
(21) Application number: 25205983.7
(22) Date of filing: 01.10.2025
(51) Int. Cl.: F22B 37/20, F22B 37/24, F23C 10/18

(54) **ARRANGEMENT FOR SUPPORTING BOILER**

(30) Priority: 01.10.2024 FI 20246178
(71) Applicant: Valmet Technologies Oy, 02150 Espoo (FI)
(72) Inventor: Räty, Sari, 33900 Tampere (FI)
(74) Representative: Kolster Oy Ab

(57) **Abstract**

In the presented solution the boiler (1) comprises a furnace (2). The furnace (2) comprises at least two side walls (4), at least two end walls (3), a roof (5), and a bottom (6). A distance between the at least two side walls (4) defines a width (W) of the furnace, a distance between the at least two end walls (3) defines a depth (D) of the furnace, and a direction between the at least two end (3) walls is a depth direction (Dd). The arrangement further comprises at least one beam (7) extending in the depth direction (Dd). The beam (7) is positioned under the bottom (6) for supporting the bottom, and the beam (7) is also positioned between the at least two side walls (4) at a distance from each side wall (4). The ends of the beam (7) extend under the vertical portions (3a) of the at least two end walls (3). The arrangement also comprises at least one rod (8) between each end of the beam (7) and the corresponding vertical portion (3a) of the side wall. The rods (8) are substantially vertical, and the rods (8) are attached to the end of the at least one beam (7) and to the corresponding vertical portion (3a) of the side wall. Thereby the rods (8) are arranged to transfer load from the beam (7) to the vertical portions (3a) of the end walls.

## Description

### FIELD OF THE INVENTION

The present invention relates to a boiler, and more particularly to an arrangement for supporting the boiler.

Boiler structures, such as structures of a circulating fluidized bed boiler, are typically very large and heavy. Therefore, the supporting of the boiler is very demanding and important.

### BRIEF DESCRIPTION OF THE INVENTION

An object of the present invention is thus to provide a new type of an arrangement for supporting a boiler. The objects of the invention are characterized by what is stated in the independent claim. Some embodiments of the invention are disclosed in the dependent claims.

In the presented solution the boiler comprises a furnace. The boiler may be a circulating fluidized bed boiler or a bubbling fluidized bed boiler, for example. The furnace comprises at least two side walls, at least two end walls, a roof, and a bottom. The furnace may comprise two side walls and two end walls such that the furnace has a rectangular horizontal cross section with four corner sections. However, the furnace may also comprise more than two side walls and/or more than two end walls such that the furnace has a polygonal horizontal cross section with even more than four corner sections. A distance between the at least two side walls defines a width of the furnace, a distance between the at least two end walls defines a depth of the furnace, and a direction between the at least two end walls is a depth direction. The at least two end walls each has a generally vertical portion and an inward slanting bottom portion whereby the depth of the furnace at the bottom portions is smaller than the depth of the furnace at the vertical portions.

The presented arrangement further comprises at least one beam extending in the depth direction. The beam is positioned under the bottom for supporting the bottom, and the beam is also positioned between the at least two side walls at a distance from each side wall. The beam is longer than the depth of the furnace at the bottom of the furnace, and the ends of the beam extend under the vertical portions of the at least two end walls. The arrangement also comprises at least one rod between each end of the beam and the corresponding vertical portion of the side wall. The rods are substantially vertical, and the rods are attached to the end of the at least one beam and to the corresponding vertical portion of the side wall. Thereby the rods are arranged to transfer load from the beam to the vertical portions of the end walls. The solution provides a simple and reliable support for the boiler. There is no need to support the bottom with a partition wall inside the furnace, for example. Also, the inward slanting bottom portions of the end walls need not at least substantially transfer load of the bottom.

According to an embodiment the arrangement comprises at least two rods between the end of the beam and the corresponding vertical portion of the end wall. Thereby the load from the beam is effectively and evenly transferred to the vertical portions of the end walls.

According to an embodiment an upper part of the rod is attached to an edge between the vertical portion of the end wall and the inward slanting bottom portion of the end wall. Thereby there is no need to substantially transfer load over the edge, and the structure of the furnace may be simple in connection with the edge.

According to an embodiment the ends of the beam are flatter than the rest of the beam. This provides space for the lower ends of the rods and for their fixing elements. Thus, the ends of the rods do not at least substantially extend lower than the lowest part of the beam.

According to an embodiment the ends of the beam are wider than the rest of the beam. This provides appropriate space for attaching two or more rods to the end of the beam if needed. Also, if the ends of the beam are flatter than the rest of the beam, making them wider increases the rigidity of the ends of the beam.

According to an embodiment the arrangement comprises elastic elements in connection with the rods for allowing thermal expansion between the rods and the walls of the furnace. Allowing thermal expansion makes the structure more reliable. Also, the rods may be positioned to a cooler environment than the wall of the furnace and the rods may remain cool during the use of the boiler.

According to an embodiment the elastic element comprises a spring. Forming the elastic element using a spring provides a simple and reliable structure for the elastic element.

According to an embodiment the rod is arranged through the end of the at least one beam, the arrangement comprises a support structure such as a plate at the lower end of the rod, and the elastic element is positioned between the support structure and a lower surface of the end of the at least one beam. Thereby the lower end of the rod is in a simple and reliable manner connected or attached to the end of the beam.

According to an embodiment the arrangement comprises tightening rods between the support structure and the lower surface of the end of the beam for restricting a maximum distance between the support structure and the lower surface of the end of the beam. Thereby the elastic element is not able to expand excessively and does not raise the end of the beam more than what is allowed.

According to an embodiment the arrangement comprises a support element between the support structure and the lower surface of the end of the beam for restricting a minimum distance between the support structure and the lower surface of the end of the beam. Thereby even a very high load of the beam does not compress the elastic element more than the support allows. The support element maintains a minimum distance between the support structure and the lower surface of the end of the beam.

### BRIEF DESCRIPTION OF THE DRAWINGS

In the following the invention will be described in greater detail by means of some embodiments with reference to the attached drawings, in which
Figure 1 schematically shows a bottom part of a boiler seen obliquely from above;
Figure 2 schematically shows in a side view the bottom part of the boiler of Figure 1 partially in cross section;
Figure 3 schematically shows in an end view the bottom part of the boiler of Figure 1;
Figure 4 schematically shows an enlarged view of the detail A in Figure 3 partially in cross section; and
Figure 5 schematically shows a bottom part of boiler according to another embodiment seen obliquely from above.

### DETAILED DESCRIPTION OF THE INVENTION

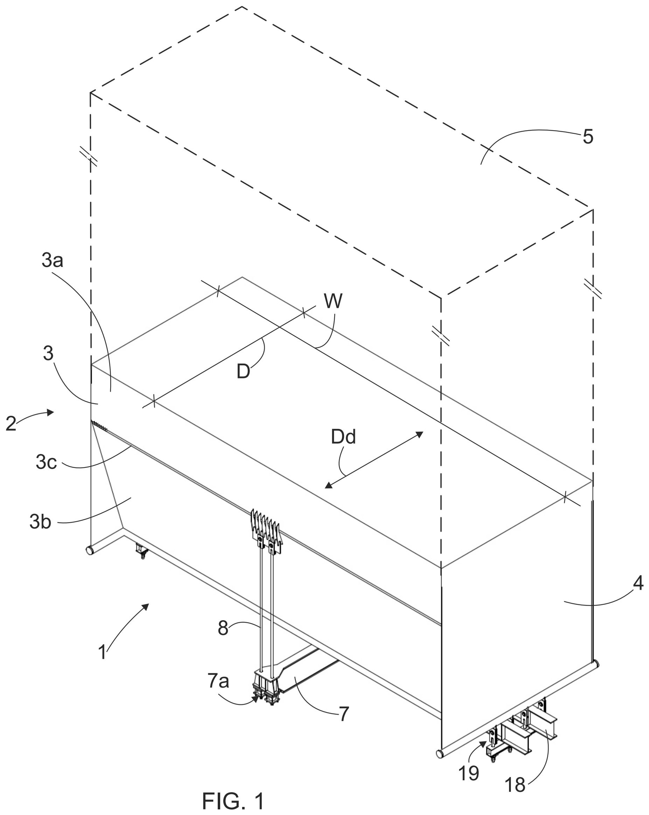

Figure 1 schematically shows a boiler 1. The boiler 1 may be a circulating fluidized bed boiler or a bubbling fluidized bed boiler, for example. The boiler 1 comprises a furnace 2. The furnace 2 comprises twoend walls 3, two side walls 4, a roof 5, and a bottom 6. Figure 1 generally only shows the bottom part of the boiler 1. However, the upper part of the boiler 1 and the roof 5 are schematically illustrated in Figure 1 with broken lines. The boiler 1 may comprise further devices that are relevant to the boiler but are not shown in the Figures. Such devices may comprise a boiler and steam circulation system, flue gas channels, superheaters, an economizer, a back pass, a fly ash collection system, and one or more cyclone separators, for example.

When the furnace 2 comprises two end walls 3 and two side walls 4 the furnace 2 has a rectangular horizontal cross section with four corner sections. However, the furnace 2 may also comprise more than two end walls 3 and/or more than two side walls 4 such that the furnace has a polygonal horizontal cross section with even more than four corner sections.

A distance between the side walls 4 defines a width W of the furnace 2. A distance between the end walls 3 defines a depth D of the furnace 2. A direction between the end walls 3 is a depth direction Dd. Typically the width W of the furnace 2 is larger than the depth D of the furnace 2 as shown in the Figures. However, in certain embodiments the width W of the furnace 2 may be almost equal to the depth D of the furnace 2 thereby providing an almost square horizontal cross section for the furnace 2. Typically the width W of the furnace 2 is between 8 to 20 meters, the depth D of the furnace 2 is between 4 to 10 meters, and the height of the furnace 2 is between 15 to 40 meters.

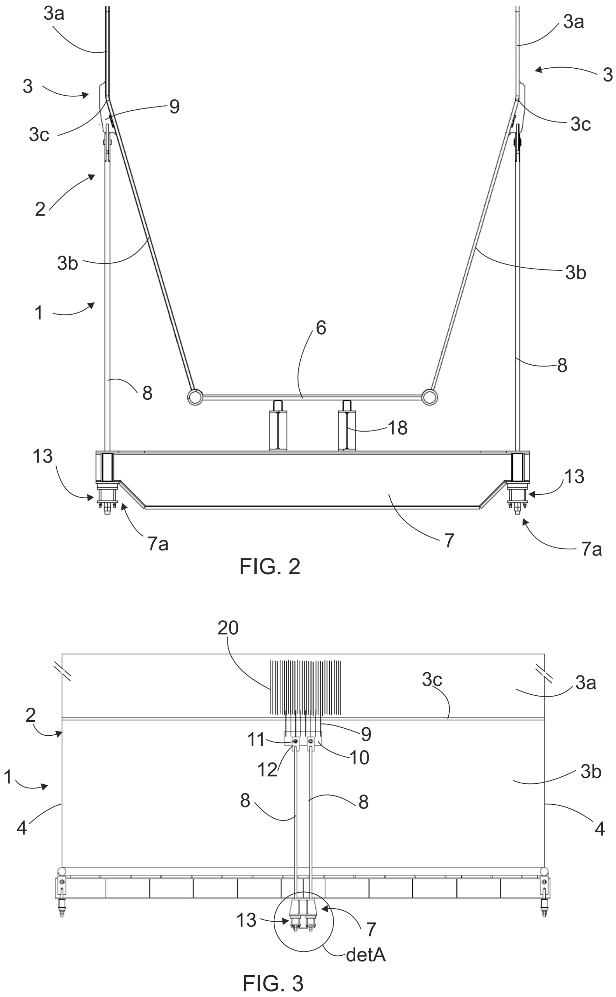

The end walls 3 have a generally vertical portion 3a and an inward slanting bottom portion 3b. The depth D of the furnace 2 at the bottom portions 3b is smaller than the depth D of the furnace 2 at the vertical portions 3a. This is clearly illustrated in Figure 2, for example. An edge 3c is formed between the vertical portion 3a of the end wall 3 and the inward slanting bottom portion 3b of the end wall 3.

The boiler 1 also comprises a beam 7 extending in the depth direction Dd. The beam 7 is positioned under the bottom 6 for supporting the bottom 6. The beam 7 may directly or indirectly contact the bottom 6. The beam 7 indirectly contacting the bottom 6 means that there is a solid structure, such as a beam, between the bottom 6 and the beam 7.

The boiler 1 may also comprise one or more beams 18 extending in the width direction of the furnace 2. The one or more beams 18 may be attached to the lower ends of the side walls 4 by attaching means 19. The attaching means 19 may comprise lugs, brackets, bolts, nuts, welds, and/or support beams, or any other suitable means for attaching the beam 18 to the lower ends of the side walls 4. In the embodiment presented in the Figures the beam 7 extending in the depth direction Dd is positioned under the beams 18 extending in the width direction. Thereby, the beam 7 extending in the depth direction Dd prevents the beams 18 extending in the width direction bending excessively.

The beam 7 extending in the depth direction Dd is positioned between the side walls 4 at a distance from each side wall 4. In the embodiment shown in the Figures the beam 7 extending in the depth direction Dd is positioned substantially in the middle of the furnace 2 in the width direction. The embodiment shown in the Figures comprises only one beam 7 extending in the depth direction Dd. However, the boiler 1 may also comprise two or more beam 7 extending in the depth direction Dd for supporting the bottom 6.

The beam 7 extending in the depth direction Dd is longer than the depth D of the furnace 2 at the bottom 6 of the furnace 2. The ends 7a of the beam extend under the vertical portions 3a of the end walls 3.

There are rods 8 between each end 7a of the beam and the corresponding vertical portion 3a of the end wall 3. The rods 8 are attached to the end 7a of the beam and to the corresponding vertical portion 3a of the end wall 3. Thereby the rods 8 are arranged to transfer load from the beam 7 to the vertical portions 3a of the end walls 3. The rods 8 may also be called hanging rods because they hang from the end walls 3 and hold the beam 7 extending in the depth direction Dd up. The rods 8 need not be supported from below.

The rods are substantially vertical. Substantially vertical means that the rods 8 deviate from the vertical direction less than 15 degrees. Preferably the direction of the rod 8 is substantially the same as the direction of the vertical portion 3a of the end wall 3. Also, according to an embodiment the direction of the rod 8 is substantially the same as the direction of a vertical tube in the end wall 3.

An upper part of the rod 8 is attached to the edge 3c between the vertical portion 3a of the end wall and the inward slanting bottom portion 3b of the end wall. The upper part of the rod 8 may be attached to the end wall 3 by any means suitable for the purpose. In the embodiment shown in the Figures the attaching means comprise lugs 9, a plate 10, bolts 11, and brackets 12. The bracket 12 is attached to the upper part of the rod 8 by welding, for example. The bracket 12 is attached to the plate 10 by bolts 11, for example. A plurality of rods 8 may be attached to one plate 10. The plate 10 may be attached to the end wall 3 using a plurality of lugs 9. The plate 10 may be attached to the lugs 9 by welding, for example. The lugs 9 may be attached to the end wall 3 by welding, for example.

The end walls 3 as well as the side walls 4 are formed in a conventional manner of vertical tubes 20 and fins welded between the tubes 20. Figure 3 schematically depicts a part of some of the tubes 20. The lugs 9 may be welded to the tubes 20 and/or to the fins between the tubes 20.

According to the embodiment shown in the Figures there is two rods 8 between the end 7a of the beam and the corresponding vertical portion 3a of the end wall. It is also possible to arrange more than two rods 8 between the end 7a of the beam and the corresponding vertical portion 3a of the end wall.

As can be clearly seen from Figure 2, for example, the ends 7a of the beam are flatter than the rest of the beam 7. Thus, the height of the beam 7 is lower at the end 7a of the beam than the height of the beam 7 elsewhere. Thereby, the lowest end of the rod 8 does not substantially extend lower than the lowest part of the beam 7.

The ends 7a of the beam are wider than the rest of the beam 7. This provides appropriate space for attaching two or more rods 8 to the end 7a of the beam if needed. Also, because the ends 7a of the beam are flatter than the rest of the beam 7a, making the ends 7a of the beam wider increases the rigidity of the ends 7a of the beam.

The boiler 1 also comprises elastic elements 13 in connection with the rods 8 for allowing thermal expansion between the rods 8 and the walls of the furnace 2. The elastic element 13 is positioned between the rod 8 and the end 7a of the beam. Specifically, in use of the boiler 1 the elastic element 13 allows a larger thermal expansion for the bottom portion 3b of the end wall than is the thermal expansion of the rod 8. Thus, the rods 8 may be positioned to a cooler environment than the wall of the furnace 2 and the rods 8 may remain cool during the use of the boiler 1.

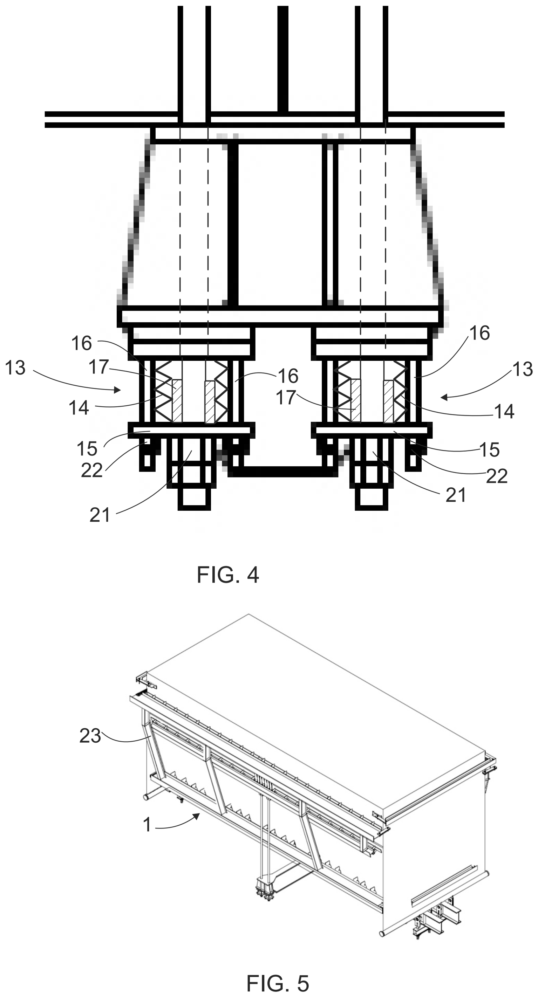

Details of the elastic element 13 are depicted in Figure 4. The elastic element 13 comprises a spring 14. In an embodiment the spring 14 is a cup spring.

The rod 8 is arranged through the end 7a of the beam 7. Thus, there is a through hole in the beam 7 for the rod 8. In the through hole there is a clearance between the rod 8 and the beam 7 such that the rod 8 and the beam 7 may move with respect to each other in the through hole in the axial direction of the rod 8.

There is a support structure such as a plate 15 at the lower end of the rod 8. The plate 15 may be attached to the lower end of the rod 8 such that the plate lies on nuts 21 that are screwed around the lower end of the rod 8 provided with threads.

The spring 14 is positioned around the rod 8 and on the plate 15. Thereby the spring 14 extends between the plate 15 and a lower surface of the end 7a of the beam. Thereby the lower end of the rod 8 is in a simple and reliable manner connected or attached to the end 7a of the beam.

There are tightening rods 16 between the plate 15 and the lower surface of the end 7a of the beam. The tightening rods 16 may be attached by welding, for example to the lower surface of the end 7a of the beam. The tightening rods 16 may be arranged through the plate 15. Thus, there may be through holes in the plate 15 for the tightening rods 16. In the through holes there may be a clearance between the tightening rod 16 and the plate 15 such that the tightening rod 16 and the plate 15 may move with respect to each other in the through hole in the axial direction of the tightening rod 16.

The spring 14 tries to push the plate 15 and the lower surface of the end 7a of the beam further away from each other. However, at the lower end of the tightening rod 16 the plate 15 is attached to the tightening rod 16 in such a manner that the plate 15 is not allowed to move any lower with respect to the tightening rod 16. Thus, the structure restricts a maximum distance between the plate 15 and the lower surface of the end 7a of the beam. There may be a nut 22, for example, at the lower end of the tightening rod 16 for preventing the plate 15 moving farther away from the lower surface of the end 7a of the beam. Thereby the spring 14 is not able to expand excessively and does not raise the end 7a of the beam more than what is allowed.

The lower ends of the tightening rods 16 may be provided with threads. Thereby the nuts 22 may be used for adjusting the maximum distance between the plate 15 and the lower surface of the end 7a of the beam.

There is a sleeve 17 attached to the plate 15. The sleeve 17 is positioned around the rod 8 and inside the spring 14. However, the sleeve 17 may be positioned elsewhere as well. The length of the sleeve 17 is smaller than a maximum distance between the plate 15 and the lower surface of the end 7a of the beam. It is also possible to attach the sleeve 17 to the lower surface of the end 7a of the beam instead of attaching the sleeve 17 to the plate 15.

The sleeve 17 is a support element between the support structure, such as the plate 15, and the lower surface of the end 7a of the beam. The sleeve 17 defines a minimum distance between the plate 15 and the lower surface of the end 7a of the beam. When the load of the beam 7 gets higher it compresses the spring 14. When the load is high enough the lower surface of the end 7a of the beam touches the upper end of the sleeve 17. Thereby, the sleeve 17 prevents the beam 7 moving towards the plate 15 any further. The sleeve 17 thus maintains a minimum distance between the plate 15 and the lower surface of the end 7a of the beam. Thereby even a very high load of the beam 7 does not compress the spring 14 more than the sleeve 17 allows.

The length of the sleeve 17 may be smaller than the maximum distance between the plate 15 and the lower surface of the end 7a of the beam such that the difference between the length of the sleeve 17 and the maximum difference equals to the difference between the thermal expansions of the walls of the furnace 2 and the rods 8. The difference between the thermal expansions may be from 5 millimeters to 30 millimeters, for example.

After the thermal expansion of the walls has occurred the loads from the beam 7 are transferred in a rigid manner to the rod 8. Also, when sand accumulates to the furnace 2, for example, the spring 14 does not yield excessively but the load is transferred from the beam to the side walls 3 in a rigid manner by the beams.

The springs 14 are dimensioned to endure a long term load. The spring 14 is never compressed to the bottom because the sleeve 17 prevents that. Also, the spring 14 is never released because the tightening rods 16 prevent that. The tightening rods 16 maintain the spring 14 in a slightly compressed state.

The end walls 3 transfer the load from the rods 8 upwards. The furnace 2 may be top-supported, whereby the roof 5 of the furnace 2 may be provided with beams and other support structures for supporting the furnace and transferring the load of the furnace 2 to further support structures. The furnace 2 may be middle-supported as well.

Figure 5 shows another embodiment of the boiler 1. The lower part of the boiler 1 comprises additional support structures 23 such as beams for supporting the end walls 3 and the side walls 4. Otherwise the solution presented in Figure 5 corresponds to the solution presented in Figures 1 to 4.

It will be obvious to a person skilled in the art that, as technology advances, the inventive concept can be implemented in various ways. The invention and its embodiments are not limited to the examples described above but may vary within the scope of the claims.

## Claims

1. An arrangement for supporting a boiler, the arrangement comprising the boiler (1),
the boiler (1) comprising
a furnace (2),
the furnace (2) comprising
at least two end walls (3),
at least two side walls (4),
a roof (5), and
a bottom (6),
wherein a distance between the at least two side walls (4) defining a width (W) of the furnace (2), a distance between the at least two end walls (3) defining a depth (D) of the furnace (2), and a direction between the at least two end walls (3) being a depth direction (Dd),
the at least two end walls (3) each having a generally vertical portion (3a) and an inward slanting bottom portion (3b) whereby the depth (D) of the furnace (2) at the bottom portions (3b) is smaller than the depth (D) of the furnace (2) at the vertical portions (3a),
the arrangement further comprising
at least one beam (7) extending in the depth direction (Dd),
the at least one beam (7) being positioned under the bottom (6) for supporting the bottom (6),
the at least one beam (7) being positioned between the at least two side walls (4) at a distance from each side wall (4),
the at least one beam (7) being longer than the depth (D) of the furnace (2) at the bottom (6) of the furnace (2), and
the ends (7a) of the at least one beam extending under the vertical portions (3a) of the at least two end walls (3), and
at least one rod (8) between each end (7a) of the at least one beam and the corresponding vertical portion (3a) of the end wall,
the rods (8) being substantially vertical,
the rods (8) being attached to the end (7a) of the at least one beam and to the corresponding vertical portion (3a) of the end wall, and
the rods (8) being arranged to transfer load from the at least one beam (7) to the vertical portions (3a) of the end walls.

2. An arrangement as claimed in claim 1, wherein at each end (7a) of the at least one beam there is at least two rods (8) between the end (7a) of the at least one beam and the corresponding vertical portion (3a) of the side wall.

3. An arrangement as claimed in claim 1 or 2, wherein an upper part of the rod (8) is attached to an edge (3c) between the vertical portion (3a) of the end wall and the inward slanting bottom portion (3b) of the end wall.

4. An arrangement as claimed in any one of the preceding claims, wherein the rods (8) are hanging rods

5. An arrangement as claimed in any one of the preceding claims, wherein the ends (7a) of the at least one beam are flatter than the rest of the at least one beam (7).

6. An arrangement as claimed in any one of the preceding claims, wherein the ends (7a) of the at least one beam are wider than the rest of the at least one beam (7).

7. An arrangement as claimed in any one of the preceding claims, wherein the arrangement comprises elastic elements (13) in connection with the rods (8) for allowing thermal expansion between the rods (8) and the walls of the furnace (2).

8. An arrangement as claimed in claim 7, wherein the elastic element (13) comprises a spring (14).

9. An arrangement as claimed in claim 7 or 8, wherein the rod (8) is arranged through the end (7a) of the at least one beam, the arrangement comprises a support structure at the lower end of the rod (8), and the elastic element (13) is positioned between the support structure and a lower surface of the end (7a) of the at least one beam.

10. An arrangement as claimed in claim 9, wherein the arrangement comprises tightening rods (16) between the support structure and the lower surface of the end (7a) of the at least one beam for restricting a maximum distance between the support structure and the lower surface of the end (7a) of the at least one beam.

11. An arrangement as claimed in claim 9 or 10, wherein the arrangement comprises a support element between the support structure and the lower surface of the end (7a) of the at least one beam for restricting a minimum distance between the support structure and the lower surface of the end (7a) of the at least one beam.

12. An arrangement as claimed in any one of the preceding claims, wherein the boiler (1) is a fluidized bed boiler.
